# NEUE EUROPÄISCHE PATENTSCHRIFT

(11) **EP 0 864 478 B2**
(45) Veröffentlichungstag und Bekanntmachung des Hinweises auf die Entscheidung über den Einspruch: **05.09.2007**
(45) Hinweis auf die Patenterteilung: 17.09.2003
(21) Anmeldenummer: 98440042.4
(22) Anmeldetag: 03.03.1998
(51) Int. Cl.: B61L 27/04

(54) **Verfahren zur Steuerung spurgebundener Fahrzeuge sowie Fahrzeugrechner und Fahrzeugsteuerungssystem hierfür**
Method for controlling railway vehicles, and also vehicle computer and vehicle control system therefor
Procédé pour commander des véhicules sur rails ainsi qu'ordinateur pour véhicule et système de commande de véhicule pour ce procédé

(30) Priorität: 04.03.1997 DE 19708559
(43) Veröffentlichungstag der Anmeldung: 16.09.1998
(73) Patentinhaber: Alcatel Lucent, 75008 Paris (FR)
(72) Erfinder: Uebel, Helmut, Dipl.-Ing., 71229 Leonberg (DE)
(74) Vertreter: Kohler Schmid Möbus

(56) Entgegenhaltungen:
- EP-A- 0 697 580
- DE-A- 3 026 652
- DE-A- 4 123 632
- PATENT ABSTRACTS OF JAPAN vol. 096, no. 012, 26.Dezember 1996 & JP 08 214415 A (HITACHI LTD), 20.August 1996,
- Dokumentation "Zugsicherungs-/Zugsteuerungssystem ETCS, Functional Requirements Specification" Teil B u. Teil E, Projekt DEUFRAKO-M, vom 31.8.1994

## Beschreibung

Die Erfindung betrifft ein Verfahren zur Steuerung spurgebundener Fahrzeuge. Das Verfahren ist besonders vorteilhaft einsetzbar zur Steuerung von Selbsttätig Signalgeführten Triebfahrzeugen (SST). Die Erfindung betrifft ferner einen Fahrzeugrechner und ein Fahrzeugsteuerungssystem, mit denen die fahrzeugseitig vorzunehmenden Verfahrensschritte ausgeführt werden können.

Ein Zugsicherungssystem für Selbsttätig Signalgeführte Triebfahrzeuge (SST) ist bekannt aus einem Aufsatz von B. Lege und G. Hillenbrand mit dem Titel "SST mit EUROLOOP", Signal und Draht, April 1995, Vol. 4, Seiten 123 - 127. In der Gleismitte verlegte Linienleiterschleifen übermitteln einem SST Datentelegramme, die Informationen zum Begriff des vorausliegenden Signals enthalten. Beim Signalbegriff "SST-Halt" wird die Entfernung übermittelt, bis zu der das SST zum Stehen gekommen sein muß. Das SST bremst dann gemäß einer Bremskurve, die von einem Fahrzeugrechner auf Grundlage der übermittelten Entfernung, der momentanen Geschwindigkeit und dem Aufenthaltsort berechnet wird. Beim Signalbegriff "SST-Fahrt" werden dem SST in Form von Datentelegrammen Streckeninformationen wie Höchstgeschwindigkeit, Langsamfahrstellen oder Haltepunkte für den vorausliegenden Streckenabschnitt mitgeteilt. Diese Informationen werden in einem elektronischen Speicher abgelegt und zur Berechnung der Sollgeschwindigkeit herangezogen.

Der wesentliche Teil der für die Zugsicherung erforderlichen Intelligenz ist bei diesem bekannten System fahrzeugseitig angeordnet. Dies führt im Vergleich zu anderen automatischen Zugleitsystemen zu einem verringertem Datenaufkommen zwischen Stellwerken und Triebfahrzeugen. Allerdings ist dieses System nur für den Verkehr auf Neben- oder Werksbahnen und nicht in komplexeren Streckennetzen geeignet.

Besondere Vorteile erlaubt dieses Konzept, wenn es auf kleine selbstangetriebene Transporteinheiten übertragen wird. Derartige Transporteinheiten sind beispielsweise bekannt aus einem Aufsatz von F. Frederich mit dem Titel "Automatisch in die Zukunft", ZEV+DET Glasers Annalen, Die Eisenbahntechnik, Feb. 1992, Vol. 116, No. 2, Seiten 33 - 36. Dort ist ein Container-Güterwagen dargestellt, auf dem ein elektrisches Antriebsaggregat und ein Stromabnehmer angeordnet sind. Durch Ausstatten solcher Transporteinheiten mit den vom SST bekannten Fahrzeugeinrichtungen läßt sich der schienengebundene Güterverkehr mit kleinen Ladungseinheiten deutlich kostengünstiger und flexibler gestalten.

JP 8214415 offenbart ein System zur selbstständigen Fahrwegstellung innerhalb eines Rangierbereichs durch ein Eisenbahnfahrzeug, welches mit einer Steuerungseinrichtung ausgestattet ist. Ausgangsort und gewünschter Zielort werden dazu in diese Steuerungseinrichtung eingegeben. Jeweils vor Erreichen einer Weiche empfängt diese Weiche ein Stellsignal von der Steuerungseinrichtung, welches eine Stellinformation aufgrund des eingegebenen Ausgangsorts, Zielorts und des aktuell ermittelten Aufenthaltsorts beinhaltet. Damit können sämtliche Weichen vom Ausgangsort bis zum Zielort ohne Einwirkung einer zentralen Steuerungseinrichtung gestellt werden.

Das im vorigen Abschnitt beschriebene Verfahren dient bevorzugt der automatischen Weichenstellung in relativ eng begrenzten Gebieten, bei welchen sich eine Fahrstraße mehr oder weniger eindeutig aus Ausgangsort und Zielort bestimmen lässt. Dieses Verfahren hat den Nachteil, dass die gesamte Streckentopologie mit allen Weichen und Weichenorten im Fahrzeug bzw. der Steuerungseinrichtung bekannt sein muss. Außerdem fehlt dem Fahrzeug jegliche dynamische Information, d.h. es hat keinerlei Information über die Belegung oder Befahrbarkeit einzelner Fahrstrassen. Bei mehreren Fahrzeugen ist außerdem keine Sicherung vor Kollisionen vorhanden.

Aufgabe der Erfindung ist es, ein Verfahren zur sicheren Steuerung spurgebundener Fahrzeuge, insbesondere solcher mit einer SST-ähnlichen Ausstattung, anzugeben. Dieses Verfahren soll insbesondere besonders geeignet sein für den Güterverkehr mit kleinen Ladungseinheiten. Das Verfahren soll es einem Absender von Gütern erlauben, mit Schienenfahrzeugen auf einfache und unbürokratische Weise Güter an einen Adressaten zu liefern. Das Verfahren soll ferner eine effektive und flexible Nutzung der vorhandenen Streckenkapazität ermöglichen.

Die Erfindung löst diese Aufgabe mit Hilfe der in Anspruch 1 angegebenen Merkmale. Erfindungsgemäß erfolgt die Eingabe des Fahrtziels direkt am . Schienenfahrzeug. Im Falle des Verkehrs mit kleinen selbständig angetriebenen Transporteinheiten bedeutet dies beispielsweise, daß ein Spediteur nach Beladen der Transporteinheit z. B. über eine Tastatur oder mit Hilfe eines Strichcodes das Fahrtziel eingibt, ohne zuvor Kontakt mit einer Vertretung des Bahnbetreibers aufgenommen zu haben. Der Spediteur braucht damit auf äußere Gegebenheiten wie Tageszeit, Feiertage o. ä. keinerlei Rücksicht zu nehmen. Falls der Bahnbetreiber verlangt, über Art und Menge der zu transportierenden Ladung informiert zu sein, so kann der Spediteur diese Angaben über die Tastatur zusätzlich zum Fahrtziel eingeben.

Das Fahrtziel wird, zusammen mit dem Aufenthaltsort und gegebenenfalls den zusätzlich eingegebenen Informationen, vorzugsweise über Funk an einen zentralen Dispositionsrechner übermittelt. Der Aufenthaltsort wird dabei von einer im Fahrzeug angeordneten Ortungseinrichtung ermittelt und auch während der Fahrt bei jeder Ortsänderung dem Dispositionsrechner mitgeteilt. Der für einen großräumigen Bereich des Streckennetzes zuständige Dispositionsrechner weist allen sich in diesem Bereich befindenden Fahrzeugen einen geeigneten Fahrweg zu. Der Dispositionsrechner ist ständig über die Aufenthaltsorte, die Fahrtziele und die Priorität der Fahrt aller sich in seinem Bereich befindenden Fahrzeuge informiert ist. Daher kann er für jedes Fahrzeug die bei gegebener Verkehrssituation optimale Fahrtroute ermitteln und bei Konflikten prioritätshöheren Fahrten Vorrang einräumen. Außerdem kann der Dispositionsrechner aufgrund der in ihm zusammenlaufenden Informationen auch einzelne Fahrzeuge zu größeren Zugeinheiten zusammenstellen und damit Rangiervorgänge automatisieren.

Die Erfindung sieht vor, daß der Dispositionsrechner die einzustellenden Fahrwege den Stellwerken mitteilt, die dann die Fahrwegeinstellung und - sicherung im Streckennetz übernehmen. Die Stellwerke wirken dazu unmittelbar ein auf die betroffenen Streckenelemente, also auf Signale, Weichen, im Gleis verlegte Leiterschleifen und Einrichtungen zur Linienzugbeeinflussung. Zur Steuerung des Fahrzeugs wird dann - zumindest im wesentlichen - auf vorhandene Linienleitersysteme, etwa die Linienzugbeeinflussung (LZB), zurückgegriffen. Bei diesem Beispiel ist der streckenseitig durchzuführende Aufwand besonders klein.

Ein anderes vorteilhaftes Ausführungsbeispiel nach Anspruch 2 sieht vor, das Fahrzeug in der vom SST bekannten Weise zu steuern. Die oben angeführten Vorteile des SST werden damit auch für die erfindungsgemäße Lösung verfügbar.

Die Erfindung wird nachfolgend anhand der Ausführungsbeispiele und der Zeichnungen eingehend erläutert. Es zeigen:
- Fig. 1:: Ein Flußdiagramm zum erfindungsgemäßen Verfahren nach Anspruch 1,
- Fig. 2:: Eine schematische Darstellung eines Streckennetzes mit einer selbstangetriebenen Transporteinheit, einem Dispositionsrechner und zwei Stellwerken nach Anspruch 1,
- Fig. 3:: Eine schematische Darstellung des Datenflusses zwischen Fahrzeug, Dispositionsrechner und Stellwerk nach Anspruch 1,
- Fig. 4:: Ein Flußdiagramm zum erfindungsgemäßen Verfahren nach Anspruch 2,
- Fig. 5:: Eine schematische Darstellung eines einen Fahrzeugrechners umfassenden Fahrzeugssteuerungssystems.

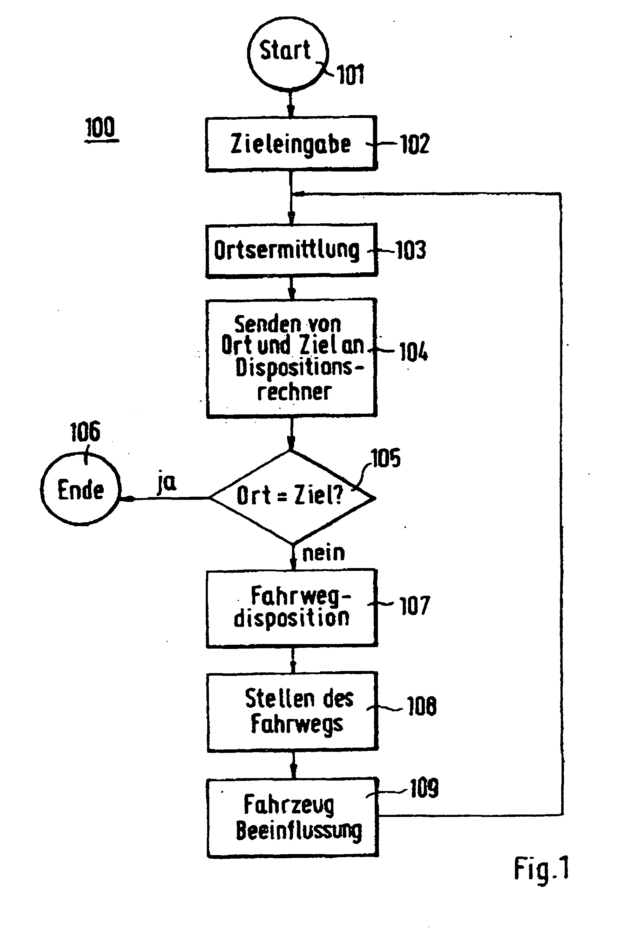

In Fig. 1 ist das erfindungsgemäße Verfahren 100 zur Steuerung spurgebundener Fahrzeuge in Form eines Flußdiagrammes dargestellt. Der Start 101 des Verfahrens 100 kann etwa darin bestehen, daß eine Bedienperson an einem schienengebundenen Fahrzeug mit Hilfe eines Schlüssels einen Fahrzeugrechner freischaltet. Der Fahrzeugrechner, auf den unten näher eingegangen wird, ist mit Eingabemitteln verbunden, mit deren Hilfe die Bedienperson das Fahrtziel des Fahrzeugs eingeben kann. Bei den Eingabemitteln kann es sich beispielsweise um eine Tastatur, um ein Spracherkennungssystem oder um ein Strichcode-Erkennungssystem handeln.

In einem nächsten Schritt 103 ermittelt das Fahrzeug seinen momentanen Aufenthaltsort. Es verfügt zu diesem Zweck über eine Ortungseinrichtung. Vorzugsweise handelt es sich bei dieser Ortungseinrichtung um einen Empfänger, der Daten von einem satellitengestützte Ortungssystem (z. B. dem Global Positioning System, GPS) empfängt und daraus seine Position bestimmt. Alternativ oder zusätzlich kann zur Ortsermittlung 103 jedoch auf an der Strecke angeordnete ortsfeste Datenübertragungseinrichtungen wie z. B. Balisen zurückgegriffen werden. Mit Radimpulsgebern und Beschleunigungsmessern kann dabei in bekannter Weise zwischen den einzelnen Datenübertragungseinrichtungen interpoliert werden, so daß eine genaue Orts- und auch Geschwindigkeitsbestimmung möglich ist.

In einem weiteren Schritt 104 sendet das Fahrzeug mittels eines sich im Fahrzeug befindenden Senders das von der Bedienperson eingegebene Fahrtziel und den Aufenthaltsort des Fahrzeugs an einen zentralen Dispositionsrechner. Die Übertragung dieser Informationen erfolgt vorzugsweise über Funk, z. B. über ein bestehendes Mobilfunknetz. Eine im signaltechnischen Sinne sichere Datenübertragung ist dabei nicht erforderlich.

In Schritt 105 vergleicht der Dispositionsrechner das eingegebene Fahrtziel mit dem Aufenthaltsort des Fahrzeugs. Das Ende 106 des Verfahrens ist erreicht, wenn sich das Fahrzeug bereits am Ziel befindet. Die Überprüfung 105 kann auch - alternativ oder zusätzlich - auf dem im Fahrzeug angeordneten Fahrzeugrechner erfolgen, denn dieser verfügt ebenfalls über die Ziel- und Ortsinformation. Solange sich das Fahrzeug noch nicht am Fahrtziel befindet, weist der Dispositionsrechner in einem Schritt 107 dem Fahrzeug im Streckennetz einen geeigneten Fahrweg zu. Die Ermittlung des geeigneten Fahrweges erfolgt unter Berücksichtung der Streckennetzdaten (Länge der Fahrwege; zulässige Geschwindigkeiten u. ä.) sowie des aktuellen Betriebszustandes. Der Betriebszustand ist u. a. charakterisiert durch die Belegung der Fahrwege durch andere Fahrzeuge, deren Priorität, Orte und Zeiten von Bauarbeiten sowie durch die Witterungsverhältnisse.

In einem weiteren Schritt 108 veranlaßt der Dispositionsrechner die Stellung des Fahrweges. Dies kann - wie unten näher erläutert - beispielsweise in der Weise geschehen, daß der Dispositionsrechner den einzustellenden Fahrweg an die betroffenen Stellwerke über ein Datennetz übermittelt. Die Stellwerke geben dann auf herkömmliche Weise die erforderlichen Stellbefehle an die Streckenelemente. Dies kann auch bedeuten, daß streckenseitige kontinuierliche oder semikontinuierliche Zugbeeinflussungseinrichtungen vom Stellwerk angesteuert werden, die dann in einem Schritt 109 auf einen sich auf dem Fahrzeug befindenden Fahrgeschwindigkeitsregler wirken und somit einen fahrerlosen Betrieb erlauben. Die Erfindung sieht jedoch auch vor, daß - wenigstens für einzelne Streckenabschnitte - eine Bedienperson die Führung des Fahrzeugs übernimmt. Eine Fahrzeugbeeinflussung im obigen Sinne findet dann im Rahmen des erfindungsgemäßen Verfahrens nicht statt. Sinnvoll kann dies beispielsweise dann sein, wenn Menschen oder Kraftfahrzeuge Zugang zum Fahrweg haben, wie dies etwa auf Betriebsgeländen häufig der Fall ist.

Das Fahrzeug ermittelt seinen momentanen Aufenthaltsort laufend und teilt diesen dem Dispositionsrechner mit. Die Ermittlung des Aufenthaltsortes wird vorzugsweise in kurzen regelmäßigen Abständen erfolgen; die Mitteilung an den Dispositionsrechner kann jedoch auch nur bei Bedarf, d. h. bei einer Änderung des Aufenthaltsortes, erfolgen. Nur im Falle sehr einfacher Netze, wie sie oft bei Klein- und Betriebsbahnen zu finden sind, kann es genügen, nur einmal dem Dispositionsrechner den Aufenthaltsort vor dem Start des Fahrzeugs mitzuteilen. Der Dispositionsrechner DR ermittelt dann einmalig den geeigneten Fahrweg. Eine Änderung des Fahrweges ist dann nach dem Start des Fahrzeugs nicht mehr möglich.

Da im Dispositionsrechner die Ziel- und Ortsinformationen aller sich im Streckennetz (oder in dem vom Dispositionsrechner überwachten räumlichen Gebiet des Netzes) befindenden Fahrzeuge zusammenlaufen, kann der Dispositionsrechner dynamisch auf auftretende Veränderungen reagieren und somit jedem Fahrzeug den optimalen Fahrweg auswählen. Dies wird in der Regel derjenige Fahrweg sein, der die kürzeste Fahrzeit ermöglicht.

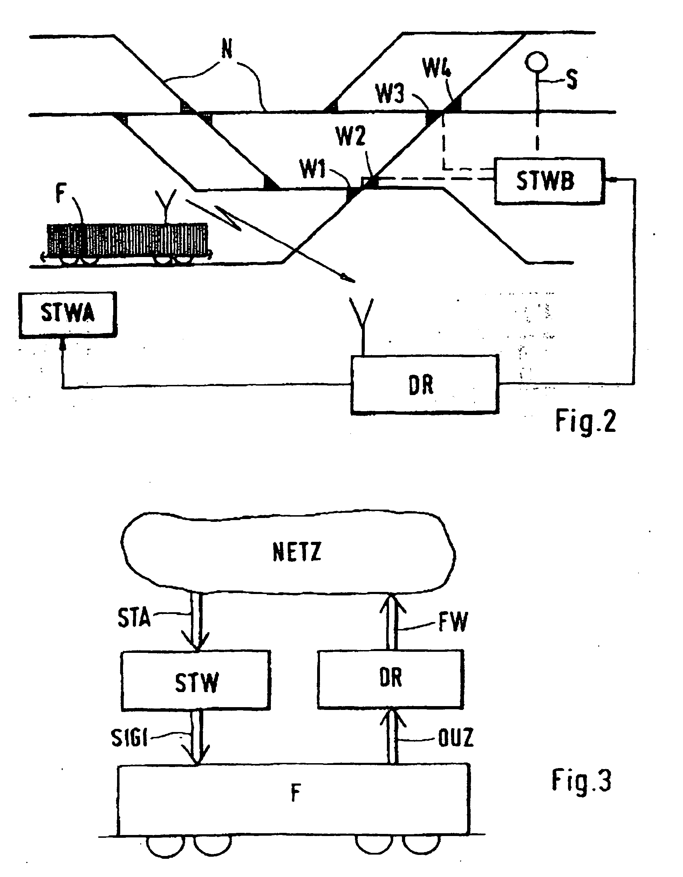

Anhand der Fig. 2 wird die Erfindung anhand einer beispielhaften und schematische Darstellung eines Streckennetzes näher erläutert. Dargestellt ist ein Fahrzeug F, welches sich auf einer Strecke im Streckennetz N befindet. Bei dem Fahrzeug F handelt es sich in dieser Darstellung um eine selbständig angetriebene Transporteinheit, d. h. um einen im wesentlichen herkömmlichen Güterwagen, der mit einem Antriebsaggregat und einem erfindungsgemäßen Fahrzeugrechner ausgestattet ist. Der mit Hilfe einer Ortungseinrichtung ermittelte Aufenthaltsort wird zusammen mit dem Fahrtziel über Funk dem Dispositionsrechner DR übermittelt.

Der Dispositionsrechner DR ermittelt nun den für das Fahrzeug F geeigneten Fahrweg. Über ein Datennetz, welches ein festes Leitungsnetz oder auch ein Funknetz sein kann, wird der Fahrweg den Stellwerken STWA und STWB übermittelt. Diese stellen dann die von der Fahrwegseinstellung betroffenen Streckenelemente, wie dies exemplarisch für die Weichen W1...W4 und das Signal S in Fig. 2 gezeigt ist. Außerdem werden von den Stellwerken Leiterschleifen (nicht dargestellt) angesteuert, die Einfluß nehmen auf den Fahrtgeschwindigkeitsregler, der sich im Fahrzeug F befindet. Das Fahrzeug F muß zu diesem Zweck geeignete Vorrichtungen haben, die einen Empfang der von den Leiterschleifen gesendeten Informationen gestatten. Die angesprochenen Vorrichtungen sind in der Literatur zur Linienzugbeeinflussung eingehend beschrieben.

Fig. 3 faßt in schematischer Darstellung zusammen, welche Informationen zwischen dem Fahrzeug F, dem Dispositionsrechner DR und dem oder den Stellwerk(en) STW ausgetauscht werden. Vom Fahrzeug F werden Ort- und Zielinformationen OUZ an den Dispositionsrechner übermittelt. Dieser wählt für das Fahrzeug F einen Fahrweg FW aus und teilt diesen Fahrweg FW über ein Informationsnetz NETZ den Stellwerken STW mit. Die Stellwerke STW geben über geeignete Streckenelemente oder auch direkt über Funk dem Fahrzeug F Anweisungen, denen das Fahrzeug die zulässige Geschwindigkeit entnehmen kann. Die Informationsübertragung vom Fahrzeug F zum Dispositionsrechner DR und vom Dispositionsrechner zu den Stellwerken STW muß nicht signaltechnisch sicher sein, da auf diesen Angaben keine Entscheidungen beruhen, die die Sicherheit des Bahnverkehrs gefährden könnten. Lediglich die vom Stellwerken STW an das Fahrzeug übertragenen Informationen müssen sicher übertragen werden.

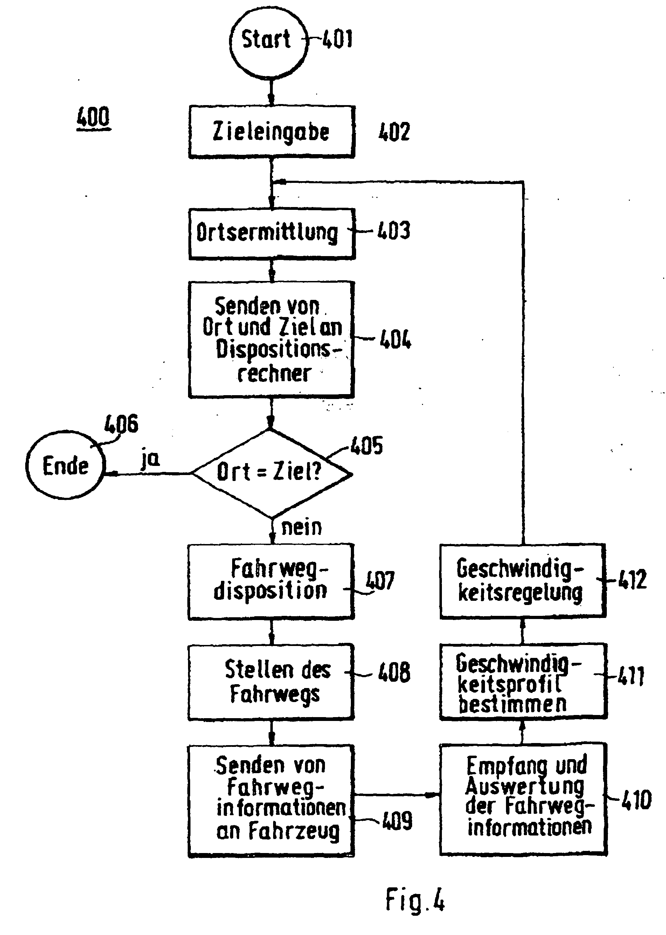

In einem weiteren vorteilhaften Ausführungsbeispiel nach Anspruch 2 nutzt das Fahrzeug Vorrichtungen, die aus dem oben erläuterten SST bekannt sind. Einzelheiten dazu können der oben zitierten Veröffentlichung entnommen werden. Die wichtigsten Schritte des erfindungsgemäßen Verfahrens 400 werden nachfolgend anhand des in Fig. 4 dargestellten Flußdiagramms erläutert. Die Schritte 401 bis 408 entsprechen den bereits oben ausführlich beschrieben Schritten 101 bis 108. Die von der Stellung des Fahrwegs in Schritt 408 betroffenen Streckenelemente senden in einem Schritt 409 Datentelegramme an das Fahrzeug. Dies kann etwa so erfolgen, daß ein Signal über einen am Signalmast angebrachten Funksender den Signalbegriff dem vorbeifahrenden Fahrzeug mitteilt. Ebenso kann aber auch, wie in der oben zitierten Veröffentlichung beschrieben, der Signalbegriff über im Gleis verlegte Linienleiterschleifen an darüber hinwegfahrende Fahrzeuge übertragen werden.

In einem Schritt 410 empfängt das Fahrzeug die ausgesendeten Informationen zum Signalbegriff und wertet diese aus. Diese Auswertung umfaßt insbesondere eine Fehlerprüfung und -korrektur, denn diese Informationen müssen signaltechnisch sicher übertragen werden. In einem Schritt 411 werden diese Informationen zur Bestimmung eines Geschwindigkeitsprofils herangezogen. Die Bestimmung kann entweder durch Berechnung erfolgen oder aber durch Auswahl eines Geschwindigkeitsprofils aus einer Vielzahl derartiger Profile, die in einem Speicher abgelegt sind. Das Geschwindigkeitsprofil wird dann dem Fahrtgeschwindigkeitsregler im Fahrzeug in einem Schritt 412 zugeführt.

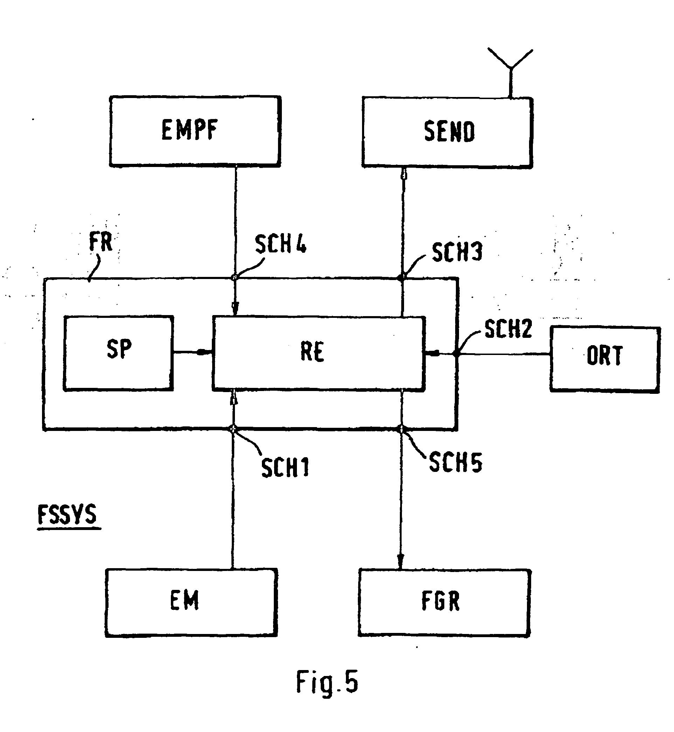

In Fig. 5 ist ein für dieses Ausführungsbeispiel vorgesehender Fahrzeugrechner FR schematisch dargestellt. Der Fahrzeugrechner FR umfaßt eine Recheneinheit RE und einen Speicher SP. Der Fahrzeugrechner FR verfügt überdies über eine Reihe von Schnittstellen zum Anschluß weiterer - eventuell im gleichen Gehäuse integrierter- Baugruppen.

Eine erste Schnittstelle SCH1 ist vorgesehen zum Anschluß von Eingabemitteln EM, etwa einer Tastatur, einem Sprach- oder einem Strichcodeerkennungssystem. Die Eingabemittel sollen es einer Bedienperson zumindest ermöglichen, das Fahrtziel des Fahrzeugs in den Rechner einzugeben. Vorzugsweise können damit auch weitere Informationen, wie beispielsweise Art und Menge der Ladung, eingegeben werden. Der Fahrzeugrechner hat eine zweite Schnittstelle SCH2, über die eine Ortungseinrichtung ORT Informationen zum Aufenthaltsort und gegebenenfalls auch zur Geschwindigkeit dem Fahrzeugrechner bereitstellt.

Der Fahrzeugrechner FR umfaßt ferner eine dritte Schnittstelle SCH3 zum Anschluß eines Senders SEND, der wenigstens den Aufenthaltsort und das Fahrtziel an einen zentralen Dispositionsrechner übermittelt. Über eine vierte Schnittstelle SCH4 stellt ein Empfänger EMPF Informationen dem Fahrzeugrechner FR zur Verfügung, die er in Form von Datentelegrammen von streckenseitigen Übertragungseinrichtungen, z. B. Linieneleiterschleifen, Baken oder Funksendern, empfangen hat. Der Fahrzeugrechner verfügt schließlich über eine fünfte Schnittstelle SCH5 zum Anschluß eines Fahrgeschwindigkeitsreglers FGR.

Die Recheneinheit RE im Fahrzeugrechner FR hat die Aufgabe, die vom Empfänger bereitgestellten Daten auf ihre Zuverlässigkeit hin zu überprüfen und auf der Grundlage dieser Daten ein geeignetes Geschwindigkeitsprofil zu bestimmen. Der Speicher SP dient der Speicherung der übermittelten Daten; gegebenenfalls können dort auch vorgegebene Geschwindigkeitsprofile abgelegt sein, aus denen die Recheneinheit RE ein geeignetes Profil auswählt.

Ein erfindungsgemäßes Fahrzeugsteuerungssystem FSSYS umfaßt den oben beschriebenen Fahrzeugrechner FR, einen Empfänger EMPF, einen Sender SEND, eine Ortungseinrichtung ORT, Eingabemittel EM sowie einen Fahrtgeschwindigkeitsregler FGR.

## Patentansprüche

1. Verfahren (100) zur Steuerung eines schienengebundenen Fahrzeugs in einem Streckennetz, umfassend die folgenden Schritte:
a) in einen auf dem Fahrzeug angeordneten Fahrzeugrechner wird ein Fahrtziel für das Fahrzeug eingegeben (102),
b) das Fahrzeug ermittelt seinen Aufenthaltsort (103),
c) der Fahrzeugrechner übermittelt den Aufenthaltsort und das Fahrtziel einem Dispositionsrechner (104),
d) der Dispositionsrechner ermittelt für das Fahrzeug einen geeigneten Fahrweg im Streckennetz (107), wobei der Dispositionsrechner (DR) aufgrund der in ihm zusammenlaufenden Information über der Aufenthaltsorte, der Fahrtziele und der Prioritäten der in seinem Bereich befindlichen Fahrzeuge für jedes Fahrzeug bei gegebener Verkehrssituation optimale Fahrtwege ermittelt und bei Konflikten prioritätshöheren Fahrzeugen Vorrang einräumt, und wobei das Fahrzeug jede Änderung seines Aufenthaltsortes dem Dispositionsrechner (DR) übermittelt.
e) der Dispositionsrechner übermittelt wenigstens einem Stellwerk (STWA, STWB) den einzustellenden Fahrweg und
f) das wenigstens eine Stellwerk überträgt die erforderlichen Stellbefehle an von der Fahrwegeinstellung betroffene Streckenelemente (108).

2. Verfahren nach Anspruch 1,
a) bei dem die betroffenen Streckenelemente nach Eingang eines Stellbefehls Datentelegramme absetzen (409),
b) bei dem ein auf dem Fahrzeug angeordneter Empfänger diese Datentelegramme empfängt und der Fahrzeugrechner die empfangenen Datentelegramme auswertet (410),
c) bei dem der Fahrzeugrechner je nach Ergebnis dieser Auswertung ein Geschwindigkeitsprofil berechnet oder aus einem mehrere Geschwindigkeitsprofile enthaltenden Speicher ein Geschwindigkeitsprofil auswählt (411)
d) und bei dem der Fahrzeugrechner die Regelung der Fahrzeuggeschwindigkeit gemäß diesem Geschwindigkeitsprofil veranlaßt (412).

3. Verfahren nach einem der vorhergehenden Ansprüche, bei dem das Fahrzeug neben dem Aufenthaltsort und dem Fahrtziel auch andere Informationen, etwa hinsichtlich Art und Zustand der Ladung oder der Geschwindigkeit, dem Dispositionsrechner übermittelt.

4. Verfahren nach einem der vorhergehenden Ansprüche, bei dem das Fahrzeug den Aufenthaltsort und das Fahrtziel auf signaltechnisch nicht sichere Weise dem Dispositionsrechner übermittelt.

5. Verfahren nach einem der vorhergehenden Ansprüche, bei dem alle sich in einem räumlichen Gebiet des Streckennetzes befindenden Fahrzeuge ihren jeweiligen Aufenthaltsort und ihr jeweiliges Fahrtziel dem Dispositionsrechner übermitteln, welcher auf der Grundlage dieser Informationen Fahrwege für diese Fahrzeuge ermittelt.

6. Dispositionsrechner (DR) mit einer Schnittstelle zu mindestens einem Fahrzeugrechner (FR) und einer Schnittstelle zu einem Informationsnetz (NETZ), an welches mindestens ein Stellwerk (STWA, STWB) angeschlossen ist, **dadurch gekennzeichnet, dass** dieser Dispositionsrechner so vorgerichtet ist, dass
• Ort -und Zielinformation (OUZ) eines Fahrzeugs (F) vom entsprechenden Fahrzeugrechner (FR) empfangen werden kann,
• aus der von dem Fahrzeugrechner (FR) erhaltenen Information einen Fahrweg (FW) für das Fahrzeug (F) ausgewählt werden kann und
• ein ausgewählter Fahrweg über die Schnittstelle zum Informationsnetz (NETZ) an das mindestens eine Stellwerk (STWA, STWB) übermittelt werden kann,
• damit das mindestens eine Stellwerk (STWA, STWB) von der Fahrwegeinstellung betroffene Streckenelemente stellen kann,
wobei dieser Dispositionsrechner so vorgerichtet ist, dass in Abhängigkeit von auftretenden Veränderungen im überwachten räumlichen Gebiet dynamisch für jedes Fahrzeug ein optimaler Fahrweg, insbesondere jeweils ein Fahrweg mit der kürzesten Fahrzeit, ausgewählt wird.

7. System zur Steuerung eines schienengebundenen Fahrzeugs (F) in einem Streckennetz, mit mindestens einem Stellwerk (STWA, STWB) und einem Informationsnetz (NETZ) mit einem Dispositionsrechner (DR) nach Anspruch 6.

## Claims

1. Method (100) for controlling a rail-guided vehicle in a route network, including the following steps:
a) a destination for the vehicle is entered into a vehicle computer, which is arranged on the vehicle (102),
b) the vehicle determines its location (103),
c) the vehicle computer transmits the location and destination to a dispatching computer (104),
d) the dispatching computer determines a suitable route in the route network for the vehicle (107), in which the dispatching computer (DC), on the basis of the information, which converges in it about the locations, destinations and priorities of the vehicles located in its area, determines optimum routes for each vehicle in the given traffic situation, and gives precedence to vehicles with higher priority in the case of conflicts and in which the vehicle transmits each change of its location to the dispatching computer (DC).
e) the dispatching computer transmits the route to be set to at least one signal box (SBA, SBB), and
f) the at least one signal box transmits the required setting commands to route elements, which are affected by the route setting (108).

2. Method according to claim 1,
a) in which the affected route elements transmit data messages after receiving a setting command (409),
b) in which a receiver, which is arranged on the vehicle receives these data messages, and the vehicle computer analyses the received data messages (410),
c) in which depending on the result of this analysis, the vehicle computer calculates a speed profile, or selects a speed profile from a memory, which contains multiple speed profiles (411),
d) and in which the vehicle computer initiates the regulation of the vehicle speed according to this speed profile (412).

3. Method according to one of the preceding claims, in which the vehicle transmits other information in addition to the location and destination, e.g. regarding the type and state of the load or the speed, to the dispatching computer.

4. Method according to one of the preceding claims, in which the vehicle transmits the location and destination to the dispatching computer in a way, which is not secure with respect to signalling technology.

5. Method according to one of the preceding claims, in which all vehicles, which are located in a spatial area of the route network transmit their respective location and respective destination to the dispatching computer, which determines routes for these vehicles on the basis of this information.

6. Dispatching computer (DC) with an interface to at least one vehicle computer (VC) and an interface to an information network (NETWORK), to which at least one signal box (SBA, SBB) is connected, **characterised in that** this dispatching computer is pre-configured so that
• location and destination information (L&D) of a vehicle (V) can be received by the appropriate vehicle computer (VC),
• from the information, which is obtained from the vehicle computer (VC), a route (R) for the vehicle (V) can be selected, and
• a selected route can be transmitted to the at least one signal box (SBA, SBB) via the interface to the information network (NETWORK),
• so that the at least one signal box (SBA, SBB) can set route elements, which are affected by the route setting.
in which this dispatching computer is pre-configured so that depending on changes, which occur in the monitored spatial area, an optimum route, in particular a route with the shortest travelling time, is selected dynamically for each vehicle.

7. System for controlling a rail-guided vehicle (V) in a route network, with at least one signal box (SBA, SBB) and an information network (NETWORK) with a dispatching computer (DC) according to claim 6.

## Revendications

1. Procédé (100) pour la commande d'un véhicule roulant sur rails dans un réseau comprenant les étapes suivantes:
a) une destination pour le véhicule est entrée (102) dans un ordinateur de véhicule placé sur le véhicule,
b) le véhicule détermine son lieu d'arrêt (103),
c) l'ordinateur de véhicule transmet le lieu d'arrêt et la destination à un ordinateur d'ordonnancement (104),
d) l'ordinateur d'ordonnancement détermine pour le véhicule un trajet approprié dans le réseau (107), l'ordinateur d'ordonnancement (DR) déterminant, pour une situation de circulation donnée, des trajets optimaux pour chaque véhicule, sur la base des informations convergeant vers lui concernant les lieux d'arrêt, les destinations et les priorités des véhicules se trouvant dans sa zone et, en cas de conflits, accordant la priorité aux véhicules avec une priorité plus élevée et le véhicule transmettant à l'ordinateur d'ordonnancement (DR) chaque modification de son lieu d'arrêt,
e) l'ordinateur d'ordonnancement transmet le trajet à mettre au point à au moins un organe de commande (STWA, STWB) et
f) le au moins un organe de commande transfère les ordres de commande nécessaires aux éléments de trajet (108) concernés par le réglage du trajet.

2. Procédé selon la revendication 1,
a) dans lequel les éléments de trajet concernés lancent des télégrammes de données après l'entrée d'un ordre de commande (409),
b) dans lequel un récepteur placé sur le véhicule reçoit ces télégrammes de données et l'ordinateur de véhicule analyse (410) les télégrammes de données reçus,
c) dans lequel l'ordinateur de véhicule calcule une vitesse en fonction du résultat de cette analyse ou sélectionne (411) un profil de vitesse dans une mémoire contenant plusieurs profils de vitesse
d) et dans lequel l'ordinateur de véhicule déclenche (412) le réglage de la vitesse du véhicule en fonction de ce profil de vitesse.

3. Procédé selon l'une quelconque des revendications précédentes, dans lequel le véhicule transmet à l'ordinateur d'ordonnancement d'autres informations en plus du lieu d'arrêt et de la destination, par exemple, concernant le type et l'état de la charge ou la vitesse.

4. Procédé selon l'une quelconque des revendications précédentes, dans lequel le véhicule ne transmet pas à l'ordinateur d'ordonnancement le lieu d'arrêt et la destination de manière sure en terme de technique de signalisation.

5. Procédé selon l'une quelconque des revendications précédentes, dans lequel tous les véhicules se trouvant dans une zone géographique du réseau transmettent leur lieu d'arrêt respectif et leur destination respective à l'ordinateur d'ordonnancement qui détermine des trajets pour ces véhicules sur la base de ces informations.

6. Ordinateur d'ordonnancement (DR) avec une interface avec au moins un ordinateur de véhicule (FR) et une interface avec un réseau d'information (NETZ) auquel est raccordé au moins un organe de commande (STWA, STWB), **caractérisé en ce que** cet ordinateur d'ordonnancement est aménagé de manière à ce que
- une information sur le lieu et la destination (OUZ) d'un véhicule (F) puisse être reçue par l'ordinateur de véhicule (FR),
- un trajet (FW) pour le véhicule (F) puisse être sélectionné à partir de l'information obtenue par l'ordinateur de véhicule (FR) et
- un trajet sélectionné puisse être transmis au au moins un organe de commande (STWA, STWB) par le biais de l'interface avec le réseau d'information (NETZ),
- pour que le au moins un organe de commande (STWA, STWB) puisse régler les éléments de trajet concernés par le réglage du trajet,
cet ordinateur d'ordonnancement étant aménagé de telle manière qu'un trajet optimal, en particulier à chaque fois un trajet avec le temps de trajet le plus court, soit sélectionné dynamiquement pour chaque véhicule en fonction de modifications apparaissant dans la zone géographique surveillée.

7. Système pour la commande d'un véhicule (F) roulant sur rails dans un réseau avec au moins un organe de commande (STWA, STWB) et un réseau d'information (NETZ) avec un ordinateur d'ordonnancement (DR) selon la revendication 6.
